# EUROPEAN PATENT APPLICATION

(11) **EP 4 711 867 A1**
(43) Date of publication of application: **18.03.2026**
(21) Application number: 24200763.1
(22) Date of filing: 17.09.2024
(51) Int. Cl.: G05B 15/02, G05B 19/042

(54) **SYSTEMS AND METHODS FOR AI-BASED CLIMATE SYSTEM CONTROL**

(71) Applicant: ADEMCO 1 LIMITED, Winnersh Triangle, Berkshire RG41 5RD (GB)
(72) Inventor: PROBIN, Robert, Glasgow, G74 1HG (GB); BRYCE, Alastair, Glasgow (GB); DEY, Soumitra, 560102 Bangalore Karnataka (IN); HENDERSON, Jordan, Glasgow (GB)
(74) Representative: Murgitroyd & Company

(57) **Abstract**

Disclosed are systems and methods that provide a novel framework for automatically and dynamically controlling and managing a climate system at a location based on past, present and/or predicted spatial, temporal, logical and/or user/device data at the location. The disclosed framework can maximize the capabilities of an implemented control system (e.g., climate and/or security) to leverage AI/ML and/or LLM predictions via novel mechanisms to understand the current and/or future needs of a user(s) within such location. The framework can enable automated notifications and/or responses to control a current environment of a location, as well as the desired environment of a user at and/or within the location, such that framework can provide, in concert with the control system at the location, a dynamically adaptive, automated system that can leverage generative software to control how climate and/or security systems control an environment tied to the comfort and protection of a locations' occupants.

## Description

### FIELD OF THE DISCLOSURE

The present disclosure is generally related to a location monitoring and control system, and more particularly, to a decision intelligence (DI)-based computerized framework for automatically and dynamically controlling and managing a climate system at a location based on past, present and/or predicted spatial, temporal, logical and/or user/device data at the location.

### SUMMARY OF THE DISCLOSURE

Current control systems and security systems are not configured with functionality and/or capabilities to accurately and efficiently predict human behaviors, and act in accordance to such predictions based on real-time events to effectuate control that addresses any expected and/or unexpected human need within a location. For example, such control systems are not configured to properly modify the climate and/or environment according to a user's current needs; rather, they are reactive to only detected sensor data and/or user inputs to modify the climate/environment. In another example, existing security systems are either armed/disarmed and/or provide security alerts only upon provided input and/or detected events that violate some static rule (e.g., a window has been broken, for example).

To that end, the disclosed systems and methods provide a computerized framework that effectuates mechanisms for a modern climate control systems that incorporates smart technology to provide personalized safety, comfort and energy efficiency. As discussed herein, the disclosed framework can feature intelligent security systems and thermostats that can learn occupants' preferences, zoning capabilities for location-based and/or room-specific control, and integrate with smart home ecosystems for dynamically-enabled command functionality. As discussed herein, the disclosed framework can leverage and/or implement artificial intelligence (AI), machine learning and/or large language models (LLMs) to predict optimal settings, use occupancy sensing and geofencing to adjust based on presence, and offer remote access via mobile apps. The framework can include advanced features that, for example, include time-of-use optimization to reduce energy costs and false alarms, integration with renewable energy sources, and comprehensive air quality management including humidity control and pollutant monitoring.

Accordingly, as discussed herein, the disclosed systems and methods can provide novel mechanisms for use in climate control ("comfort") systems, security systems, smoke/fire systems, and the like, for which a location (e.g., house, building, office, patio, and the like) can be equipped with to ensure its occupants comfort, security and safety.

According to embodiments of the instant disclosure, it should be understood that the discussion herein that references a location can correspond to, but not be limited to, a home, office, building and/or any other type of definable structure and/or geographic location for which a control system (e.g., comfort/climate control and/or security system, for example) can be provided.

According to some embodiments, a method is disclosed for a DI-based computerized framework for automatically and dynamically controlling and managing a climate system at a location based on past, present and/or predicted spatial, temporal, logical and/or user/device data at the location. In accordance with some embodiments, the present disclosure provides a non-transitory computer-readable storage medium for carrying out the above-mentioned technical steps of the framework's functionality. The non-transitory computer-readable storage medium has tangibly stored thereon, or tangibly encoded thereon, computer readable instructions that when executed by a device cause at least one processor to perform a method for automatically and dynamically controlling and managing a climate system at a location based on past, present and/or predicted spatial, temporal, logical and/or user/device data at the location.

In accordance with one or more embodiments, a system is provided that includes one or more processors and/or computing devices configured to provide functionality in accordance with such embodiments. In accordance with one or more embodiments, functionality is embodied in steps of a method performed by at least one computing device. In accordance with one or more embodiments, program code (or program logic) executed by a processor(s) of a computing device to implement functionality in accordance with one or more such embodiments is embodied in, by and/or on a non-transitory computer-readable medium.

### DESCRIPTIONS OF THE DRAWINGS

The features, and advantages of the disclosure will be apparent from the following description of embodiments as illustrated in the accompanying drawings, in which reference characters refer to the same parts throughout the various views. The drawings are not necessarily to scale, emphasis instead being placed upon illustrating principles of the disclosure:
FIG. 1 is a block diagram of an example configuration within which the systems and methods disclosed herein could be implemented according to some embodiments of the present disclosure;
FIG. 2 is a block diagram illustrating components of an exemplary system according to some embodiments of the present disclosure;
FIG. 3A illustrates an exemplary workflow according to some embodiments of the present disclosure;
FIG. 3B depicts a non-limiting example according to some embodiments of the present disclosure;
FIG. 4A illustrates an exemplary workflow according to some embodiments of the present disclosure;
FIG. 4B depicts a non-limiting example according to some embodiments of the present disclosure;
FIG. 5 depicts an exemplary implementation of an architecture according to some embodiments of the present disclosure;
FIG. 6 depicts an exemplary implementation of an architecture according to some embodiments of the present disclosure; and
FIG. 7 is a block diagram illustrating a computing device showing an example of a client or server device used in various embodiments of the present disclosure.

### DETAILED DESCRIPTION

The present disclosure will now be described more fully hereinafter with reference to the accompanying drawings, which form a part hereof, and which show, by way of non-limiting illustration, certain example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and", "or", or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The present disclosure is described below with reference to block diagrams and operational illustrations of methods and devices. It is understood that each block of the block diagrams or operational illustrations, and combinations of blocks in the block diagrams or operational illustrations, can be implemented by means of analog or digital hardware and computer program instructions. These computer program instructions can be provided to a processor of a general purpose computer to alter its function as detailed herein, a special purpose computer, ASIC, or other programmable data processing apparatus, such that the instructions, which execute via the processor of the computer or other programmable data processing apparatus, implement the functions/acts specified in the block diagrams or operational block or blocks. In some alternate implementations, the functions/acts noted in the blocks can occur out of the order noted in the operational illustrations. For example, two blocks shown in succession can in fact be executed substantially concurrently or the blocks can sometimes be executed in the reverse order, depending upon the functionality/acts involved.

For the purposes of this disclosure a non-transitory computer readable medium (or computer-readable storage medium/media) stores computer data, which data can include computer program code (or computer-executable instructions) that is executable by a computer, in machine readable form. By way of example, and not limitation, a computer readable medium may include computer readable storage media, for tangible or fixed storage of data, or communication media for transient interpretation of code-containing signals. Computer readable storage media, as used herein, refers to physical or tangible storage (as opposed to signals) and includes without limitation volatile and non-volatile, removable and non-removable media implemented in any method or technology for the tangible storage of information such as computer-readable instructions, data structures, program modules or other data. Computer readable storage media includes, but is not limited to, RAM, ROM, EPROM, EEPROM, flash memory or other solid state memory technology, optical storage, cloud storage, magnetic storage devices, or any other physical or material medium which can be used to tangibly store the desired information or data or instructions and which can be accessed by a computer or processor.

For the purposes of this disclosure the term "server" should be understood to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and application software that support the services provided by the server. Cloud servers are examples.

For the purposes of this disclosure a "network" should be understood to refer to a network that may couple devices so that communications may be exchanged, such as between a server and a client device or other types of devices, including between wireless devices coupled via a wireless network, for example. A network may also include mass storage, such as network attached storage (NAS), a storage area network (SAN), a content delivery network (CDN) or other forms of computer or machine-readable media, for example. A network may include the Internet, one or more local area networks (LANs), one or more wide area networks (WANs), wire-line type connections, wireless type connections, cellular or any combination thereof. Likewise, sub-networks, which may employ differing architectures or may be compliant or compatible with differing protocols, may interoperate within a larger network.

For purposes of this disclosure, a "wireless network" should be understood to couple client devices with a network. A wireless network may employ stand-alone ad-hoc networks, mesh networks, Wireless LAN (WLAN) networks, cellular networks, or the like. A wireless network may further employ a plurality of network access technologies, including Wi-Fi, Long Term Evolution (LTE), WLAN, Wireless Router mesh, or 2nd, 3rd, 4^{th} or 5^{th} generation (2G, 3G, 4G or 5G) cellular technology, mobile edge computing (MEC), Bluetooth, 802.11b/g/n, or the like. Network access technologies may enable wide area coverage for devices, such as client devices with varying degrees of mobility, for example.

In short, a wireless network may include virtually any type of wireless communication mechanism by which signals may be communicated between devices, such as a client device or a computing device, between or within a network, or the like.

A computing device may be capable of sending or receiving signals, such as via a wired or wireless network, or may be capable of processing or storing signals, such as in memory as physical memory states, and may, therefore, operate as a server. Thus, devices capable of operating as a server may include, as examples, dedicated rack-mounted servers, desktop computers, laptop computers, set top boxes, integrated devices combining various features, such as two or more features of the foregoing devices, or the like.

For purposes of this disclosure, a client (or user, entity, subscriber or customer) device may include a computing device capable of sending or receiving signals, such as via a wired or a wireless network. A client device may, for example, include a desktop computer or a portable device, such as a cellular telephone, a smart phone, a display pager, a radio frequency (RF) device, an infrared (IR) device a Near Field Communication (NFC) device, a Personal Digital Assistant (PDA), a handheld computer, a tablet computer, a phablet, a laptop computer, a set top box, a wearable computer, smart watch, an integrated or distributed device combining various features, such as features of the forgoing devices, or the like.

A client device may vary in terms of capabilities or features. Claimed subject matter is intended to cover a wide range of potential variations, such as a web-enabled client device or previously mentioned devices may include a high-resolution screen (HD or 4K for example), one or more physical or virtual keyboards, mass storage, one or more accelerometers, one or more gyroscopes, global positioning system (GPS) or other location-identifying type capability, or a display with a high degree of functionality, such as a touch-sensitive color 2D or 3D display, for example.

Certain embodiments and principles will be discussed in more detail with reference to the figures. According to some embodiments, the disclosed systems and methods provide a novel computerized framework that can execute to not only predict certain events within and/or around a location, but maximize the capabilities of an implemented control system (e.g., climate and/or security) to leverage such predictions via novel mechanisms to understand the current and/or future needs of a user(s) within such location. Such novel mechanisms, as discussed in more detail, can involve the integration and/or implementation of AI, ML and/or large language models (LLMs), such that predicted events as well as currently detected data related to current and/or ongoing events can be fed to the disclosed framework, whereby adaptive, personalized and/or customized responses can be output. Such output can enable automated responses to control a current environment of a location, as well as the desired environment of a user at and/or within the location. Accordingly, the disclosed framework can provide a dynamically adaptive, automated system that can leverage generative software to control how climate and/or security systems control an environment to comfort and protect a locations' resident users.

The latest transformer-based LLMs have, among other features and capabilities, theory of mind, abilities to reason, abilities to make a list of tasks, abilities to plan and react to changes (via reviewing their own previous decisions), abilities to understand multiple data sources (and types of data - multimodal), abilities to have conversations with humans in natural language, abilities to adjust, abilities to interact with and/or control application program interfaces (APIs), abilities to remember information long term, abilities to use tools (e.g., read multiple schedules/calendars, command other systems, search for data, and the like), abilities to use other LLM and other types of AI/ML (e.g., neural networks to look for patterns, recognize humans, pets, and the like, for example), abilities to check whether reports, ability to talk to other devices over standard device-to-device protocols, abilities to improve itself, abilities to correct mistakes and learn using reflection, and the like.

Thus, as provided herein, the disclosed integration of such LLM technology together with control programs for location management (e.g., comfort and/or security systems) provides an improved system for a location's control. As evidenced from the instant disclosure, this can lead to an improved environment for a user (e.g., improved user experience), as well as an improved operational efficiency, resource management and management of a location by the implemented control system(s).

It should be understood that while the discussion herein may generally focus on a control system for a location, the system architecture and/or capabilities of the control system can be specifically configured for a comfort/climate system and/or security system without departing from the scope of the instant disclosure.

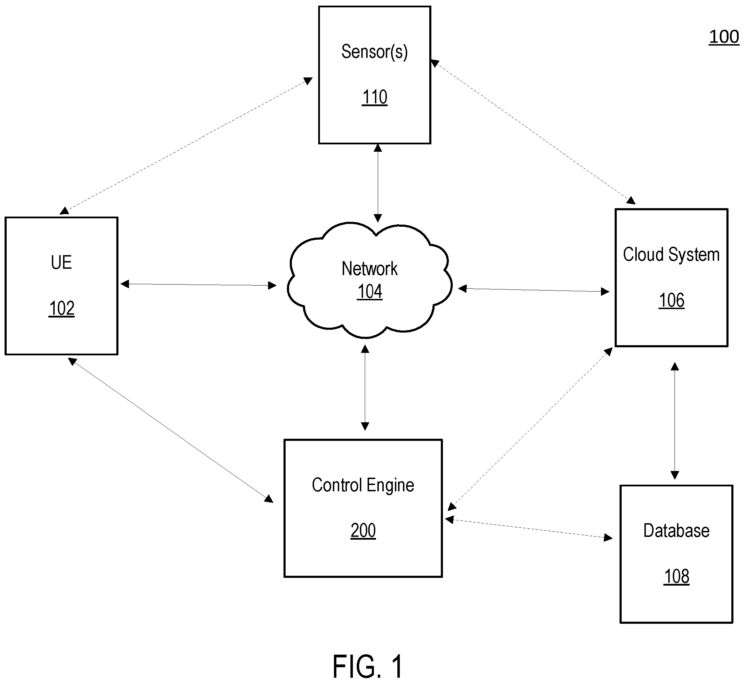

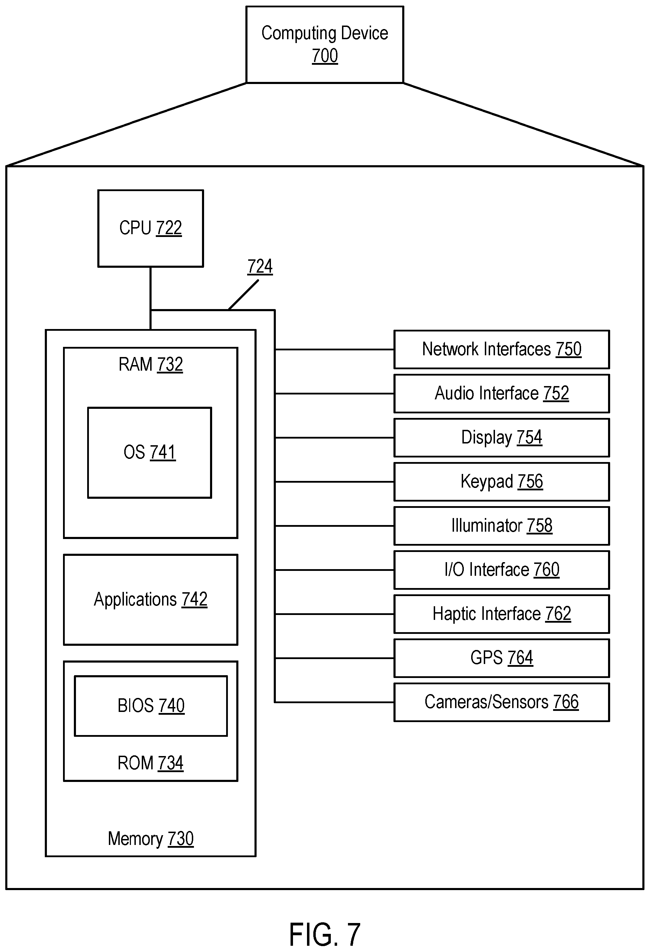

With reference to FIG. 1, system 100 is depicted which includes user equipment (UE) 102 (e.g., a client device, as mentioned above and discussed below in relation to FIG. 7), network 104, cloud system 106, database 108, sensors 110 and control engine 200. It should be understood that while system 100 is depicted as including such components, it should not be construed as limiting, as one of ordinary skill in the art would readily understand that varying numbers of UEs, peripheral devices, sensors, cloud systems, databases and networks can be utilized; however, for purposes of explanation, system 100 is discussed in relation to the example depiction in FIG. 1.

According to some embodiments, UE 102 can be any type of device, such as, but not limited to, a mobile phone, tablet, laptop, sensor, smart television (TV) Internet of Things (IoT) device, autonomous machine, wearable device, and/or any other device equipped with a cellular or wireless or wired transceiver. For example, UE 102 can be a thermostat and/or security control panel.

In some embodiments, a peripheral device (not shown) can be connected to UE 102, and can be any type of peripheral device, such as, but not limited to, a wearable device (e.g., smart ring or smart watch), printer, speaker, sensor, and the like. In some embodiments, a peripheral device can be any type of device that is connectable to UE 102 via any type of known or to be known pairing mechanism, including, but not limited to, WiFi, Bluetooth^{™}, Bluetooth Low Energy (BLE), NFC, and the like.

According to some embodiments, sensors 110 (or sensor devices 110) can correspond to any type of device, component and/or sensor associated with a location of system 100 (referred to, collectively, as "sensors"). In some embodiments, the sensors 110 can be any type of device that is capable of sensing and capturing data/metadata related to a user and/or activity of the location. For example, the sensors 110 can include, but not be limited to, cameras, motion detectors, door and window contacts, temperature, heat and smoke detectors, passive infrared (PIR) sensors, time-of-flight (ToF) sensors, and the like. In some embodiments, the sensors 110 can be associated with devices associated with the location of system 100, such as, for example, lights, smart locks, garage doors, smart appliances (e.g., thermostat, refrigerator, television, personal assistants (e.g., Alexa^{®}, Nest^{®}, for example)), smart rings, smart phones, smart watches or other wearables, tablets, personal computers, and the like, and some combination thereof. For example, the sensors 110 can include the sensors on UE 102 (e.g., smart phone) and/or peripheral device (e.g., a paired smart watch).

In some embodiments, network 104 can be any type of network, such as, but not limited to, a wireless network, cellular network, the Internet, and the like (as discussed above). Network 104 facilitates connectivity of the components of system 100, as illustrated in FIG. 1.

According to some embodiments, cloud system 106 may be any type of cloud operating platform and/or network based system upon which applications, operations, and/or other forms of network resources may be located. For example, system 106 may be a service provider and/or network provider from where services and/or applications may be accessed, sourced or executed from. For example, system 106 can represent the cloud-based architecture associated with a location monitoring and control system provider (e.g., climate and/or security system provided by Resideo^{®}), which has associated network resources hosted on the internet or private network (e.g., network 104), which enables (via engine 200) the location management discussed herein.

In some embodiments, cloud system 106 may include a server(s) and/or a database of information which is accessible over network 104. In some embodiments, a database 108 of cloud system 106 may store a dataset of data and metadata associated with local and/or network information related to a user(s) of the components of system 100 and/or each of the components of system 100 (e.g., UE 102, sensors 110, and the services and applications provided by cloud system 106 and/or control engine 200).

In some embodiments, for example, cloud system 106 can provide a private/proprietary management platform, whereby engine 200, discussed *infra,* corresponds to the novel functionality system 106 enables, hosts and provides to a network 104 and other devices/platforms operating thereon.

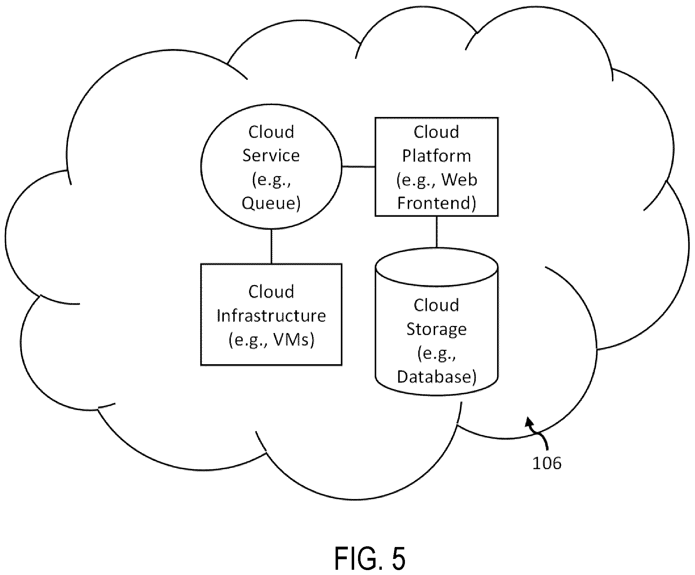

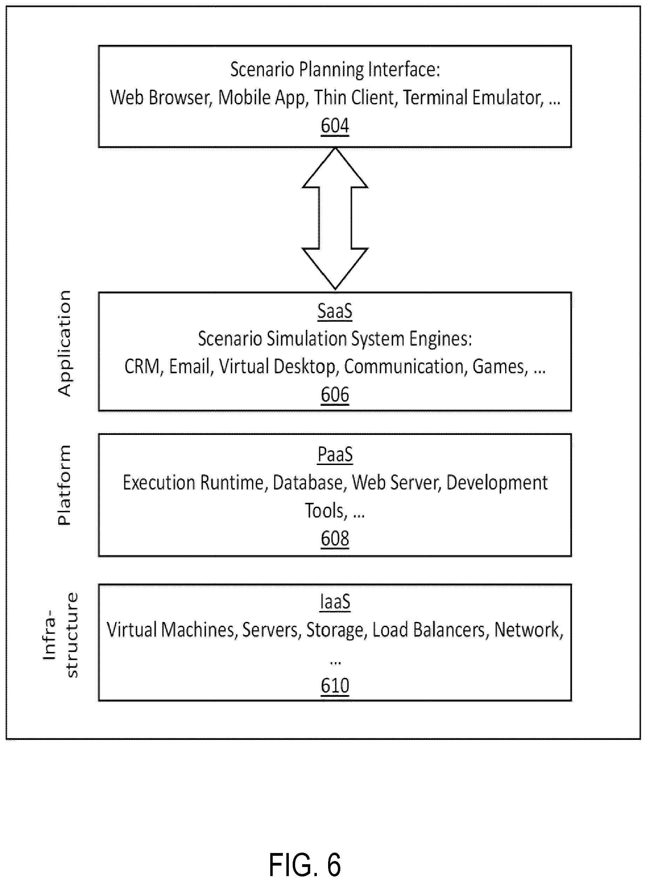

Turning to FIG. 5 and FIG. 6, in some embodiments, the exemplary computer-based systems/platforms, the exemplary computer-based devices, and/or the exemplary computer-based components of the present disclosure may be specifically configured to operate in a cloud computing/architecture 120 such as, but not limiting to: infrastructure as a service (IaaS) 610, platform as a service (PaaS) 608, and/or software as a service (SaaS) 606 using a web browser, mobile app, thin client, terminal emulator or other endpoint 604. FIG. 5 and FIG. 6 illustrate schematics of non-limiting implementations of the cloud computing/architecture(s) in which the exemplary computer-based systems for administrative customizations and control of network-hosted application program interfaces (APIs) of the present disclosure may be specifically configured to operate.

Turning back to FIG. 1, according to some embodiments, database 108 may correspond to a data storage for a platform (e.g., a network hosted platform, such as cloud system 106, as discussed *supra)* or a plurality of platforms. Database 108 may receive storage instructions/requests from, for example, engine 200 (and associated microservices), which may be in any type of known or to be known format, such as, for example, standard query language (SQL). According to some embodiments, database 108 may correspond to any type of known or to be known storage, for example, a memory or memory stack of a device, a distributed ledger of a distributed network (e.g., blockchain, for example), a look-up table (LUT), and/or any other type of secure data repository.

Control engine 200, as discussed above and further below in more detail, can include components for the disclosed functionality. According to some embodiments, control engine 200 may be a special purpose machine or processor, and can be hosted by a device on network 104, within cloud system 106 and/or on UE 102. In some embodiments, engine 200 may be hosted by a server and/or set of servers associated with cloud system 106.

According to some embodiments, as discussed in more detail below, control engine 200 may be configured to implement and/or control a plurality of services and/or microservices, where each of the plurality of services/microservices are configured to execute a plurality of workflows associated with performing the disclosed device management. Non-limiting embodiments of such workflows are provided below.

According to some embodiments, as discussed above, control engine 200 may function as an application provided by cloud system 106. In some embodiments, engine 200 may function as an application installed on a server(s), network location and/or other type of network resource associated with system 106. In some embodiments, engine 200 may function as an application installed and/or executing on UE 102 and/or sensors 110. In some embodiments, such application may be a web-based application accessed by UE 102 and/or devices associated with sensors 110 over network 104 from cloud system 106. In some embodiments, engine 200 may be configured and/or installed as an augmenting script, program or application (e.g., a plug-in or extension) to another application or program provided by cloud system 106 and/or executing on UE 102 and/or sensors 110.

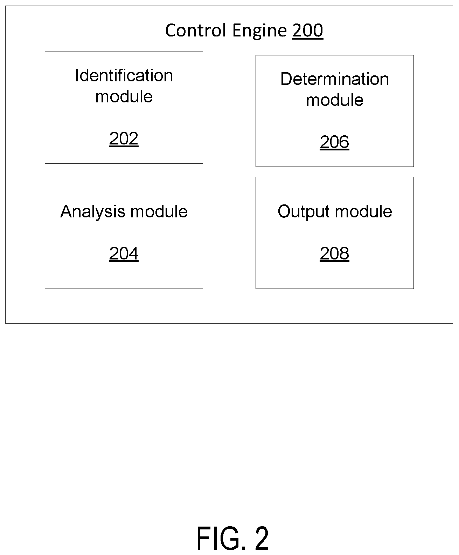

As illustrated in FIG. 2, according to some embodiments, control engine 200 includes identification module 202, analysis module 204, determination module 206 and output module 208. It should be understood that the engine(s) and modules discussed herein are non-exhaustive, as additional or fewer engines and/or modules (or sub-modules) may be applicable to the embodiments of the systems and methods discussed. More detail of the operations, configurations and functionalities of engine 200 and each of its modules, and their role within embodiments of the present disclosure will be discussed below.

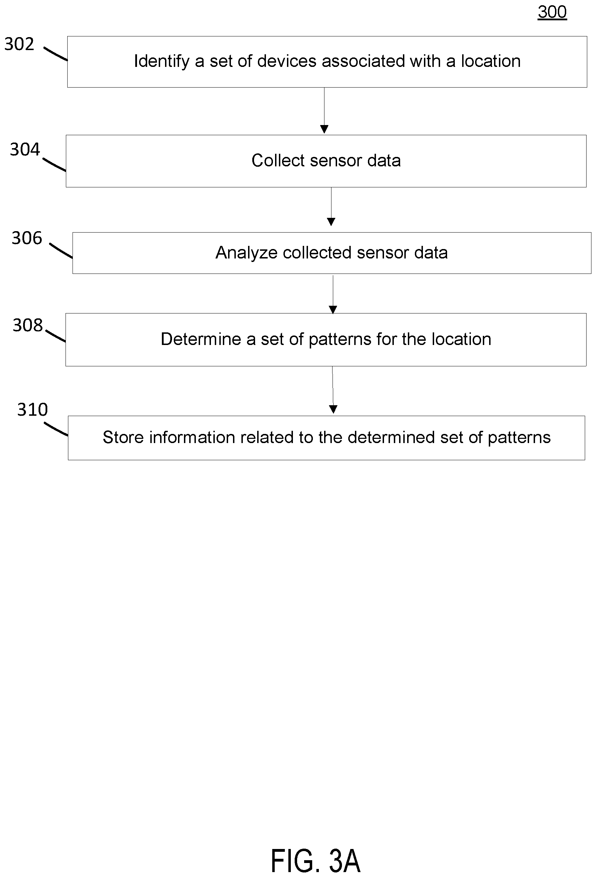

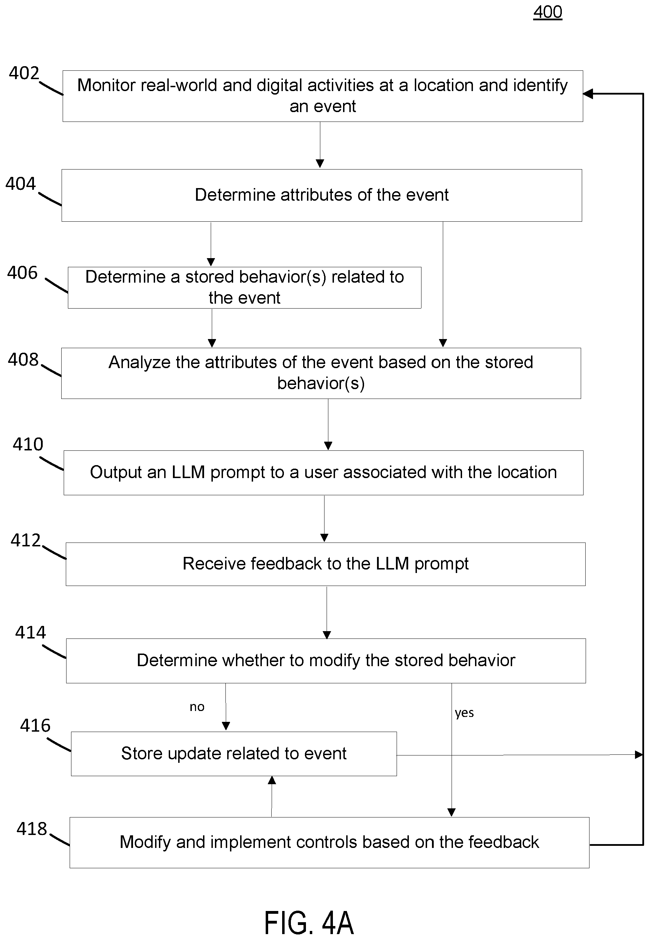

Turning to FIG. 3A, Process 300 provides non-limiting example embodiments for the disclosed location management framework. According to some embodiments, Process 300 provides non-limiting embodiments for determining corresponding patterns of behavior at a location for which the disclosed framework (e.g., via control engine 200) can control, manage and manipulate the operational status of a device (e.g., thermostat and/or security panel) at the location. As discussed below at least in relation to Process 400 of FIG. 4A, the leveraged and stored information can be utilized to perform the device management.

By way of a non-limiting example, as discussed herein via the steps of Processes 300 and 400, discussed *infra,* the disclosed systems and methods can leverage known patterns and detected event data (e.g., related to activities by users and/or other users and/or items at a location) to control an environment of a location. As discussed herein, the location can be a climate system and/or a security system.

By way of example, respective to a climate system, the disclosed framework can involve management of a climate system, via LLM functionality, via capabilities involving, but not limited to, control of heating or cooling sources (e.g., heat pumps, furnaces, boilers, solar, and the like), control of other information on room or location state (e.g., window or door contacts, and the like), status and control of energy sources and storage (e.g., solar, battery storage, water heating solar, and the like), control of other comfort items (e.g., air circulation fans, windows, binds, shades, and the like), integration with various voice assistants, mobile phone applications, web applications, and more types of user interfaces, and the like, and/or some combination thereof.

In some embodiments, the management framework disclosed herein can have the capabilities to, but not limited to, communicate with users to ask for their needs (e.g., over text or voice or other means, in plain language), check work and home electronic calendars, access to sensors (e.g., temperature sensors, occupancy sensors, and the like), query users about any perceived variation in schedule, interact (e.g., via standard home automation protocols), and the like. In some embodiments, for example, systems may or may not have the ability to listen into conversations and/or identify users directly from internal external cameras or sensors (e.g. video doorbells, security system cameras, access control or door locks) in order to know who is inside the house or what their plans are without mandating direct programming of the system or for the system to be directly addressed.

Accordingly, by way of example, in some embodiments, Processes 300 and 400 can operate to adapt and tailor a climate at a location based on ongoing changes, vary the intent and mechanisms for which specific criteria is learned, and provided as an improved user interface to the control system.

By way of example, respective to a security system, the disclosed framework can adapt and adjust its reasoning for triggering alarms, arming the system, disarming the system and the like. In a LLM-based security system, a system can understand the users and property, and track authorized users of the property. Unauthorized users in areas can be challenged (e.g., using speech), and if they can answer, alarms can be raised (local or remote). The disclosed security system can have a set of predefined and/or dynamically determined rules it can comply with and reason against, whereby rules for inside, outside and/or certain areas in/around the location can be based on the requirements, context and/or current activity of a user(s) at the location.

Accordingly, by way of example, in some embodiments, Processes 300 and 400 can operate to adapt and tailor security and monitoring of a location based on ongoing changes, and vary it's goals based on specific criteria it learns, and provide an improved user experience related to the safety it provides a user(s).

According to some embodiments, Steps 302-304 of Process 300 can be performed by identification module 202 of control engine 200; Step 306 can be performed by analysis module 204; Step 308 can be performed by determination module 204; and Step 310 can be performed by output module 208.

According to some embodiments, Process 300 begins with Step 302 where a set of devices associated with a user (and in some embodiments, associated with a location, for example, a user's home) are identified. According to some embodiments, the devices can be associated with any type of UE 102, sensors 110, and the like, discussed above in relation to FIG. 1. For example, the devices can at least include, but are not limited to, a user's smart phone, tablet devices in the home connected to the local network (e.g., Wi-Fi), televisions, routers/modems providing the network for the location, motion sensors, temperature sensors, door contacts, and the like. Additional, non-limiting examples of sensors and the types of collectable data are discussed above at least in relation to FIG. 1.

In some embodiments, the identified devices can be paired and/or connected with another device (e.g., sensor 110, engine 200 and/or UE 102) via a cloud and/or cloud-to-cloud (C2C) connection (e.g., establish connection with a third party cloud, which connects with cloud system 106, for example).

In Step 304, engine 200 can operate to trigger the identified devices to collect data about the location (e.g., referred to as sensor data). According to some embodiments, the sensor data can be collected continuously and/or according to a predetermined period of time or interval. In some embodiments, sensor data may be collected based on detected events. In some embodiments, type and/or quantity of sensor data may be directly tied to the type of device performing such data collection. For example, if a user is detected as walking into their house and the motion sensor captures such activity, then sensor data related to, but not limited to, a time, date, area of the location (e.g., which door), which direction, speed, user identity, device identity, and the like, or some combination thereof, can be captured.

In some embodiments, such sensor data may be derived and/or mined from stored sensor data within an associated or third party cloud. For example, engine 200 can be associated with a cloud, which can store collected sensor data for the location in an associated account of a user and/or the location. Thus, in some embodiments, Step 304 can involve querying the cloud for information about the location, which can be based on a criteria that can include, but is not limited to, a time, date, activity, event, other collected sensor data, and the like, or some combination thereof.

In some embodiments, the collected sensor data in Step 304 can be stored in database 108 in association with an identifier (ID) of a user, an ID of the device, an ID of the location and/or an ID of an account of the user/device/location.

In Step 306, engine 200 can analyze the collected sensor data. According to some embodiments, engine 200 can implement any type of known or to be known computational analysis technique, algorithm, mechanism or technology to analyze the collected sensor data from Step 306.

In some embodiments, engine 200 may execute and/or include a specific trained artificial intelligence / machine learning model (AI/ML), a particular machine learning model architecture, a particular machine learning model type (e.g., convolutional neural network (CNN), recurrent neural network (RNN), autoencoder, support vector machine (SVM), and the like), or any other suitable definition of a machine learning model or any suitable combination thereof.

In some embodiments, engine 200 may leverage a large language model (LLM), whether known or to be known. An LLM is a type of AI system designed to understand and generate human-like text based on the input it receives. The LLM can implement technology that involves deep learning, training data, statistical language models (SLMs) and natural language processing (NLP). As discussed herein, such known or to be known SLMs and/or NLPs can be utilized for, but not limited to, machine translation, speech recognition, text/speech generation, sentiment analysis, conversational dialog, and the like, or some combination thereof, as is capable with LLMs. Large language models are built using deep learning techniques, specifically using a type of neural network called a transformer. These networks have many layers and millions or even billions of parameters. LLMs can be trained on vast amounts of text data from the internet, books, articles, and other sources to learn grammar, facts, and reasoning abilities. The training data helps them understand context and language patterns. LLMs can use NLP techniques to process and understand text. This includes tasks like tokenization, part-of-speech tagging, and named entity recognition.

LLMs can include functionality related to, but not limited to, text generation, language translation, text summarization, question answering, conversational AI, text classification, language understanding, content generation, and the like. Accordingly, LLMs can generate, comprehend, analyze and output human-like outputs (e.g., text, speech, audio, video, and the like) based on a given input, prompt or context. Accordingly, LLMs, which can be characterized as transformer-based LLMs, involve deep learning architectures that utilizes self-attention mechanisms and massive-scale pre-training on input data to achieve NLP understanding and generation. Such current and to-be-developed models can aid AI systems in handling human language and human interactions therefrom.

In some embodiments, engine 200 may be configured to utilize one or more AI/ML techniques chosen from, but not limited to, computer vision, feature vector analysis, decision trees, boosting, support-vector machines, neural networks, nearest neighbor algorithms, Naive Bayes, bagging, random forests, logistic regression, and the like. By way of a non-limiting example, engine 200 can implement an XGBoost algorithm for regression and/or classification to analyze the sensor data, as discussed herein.

According to some embodiments, the AI/ML and LLM computational analysis algorithms implemented can be applied and/or executed in a time-based manner, in that collected sensor data for specific time periods can be allocated to such time periods so as to determine patterns of activity (or non-activity) according to a criteria.

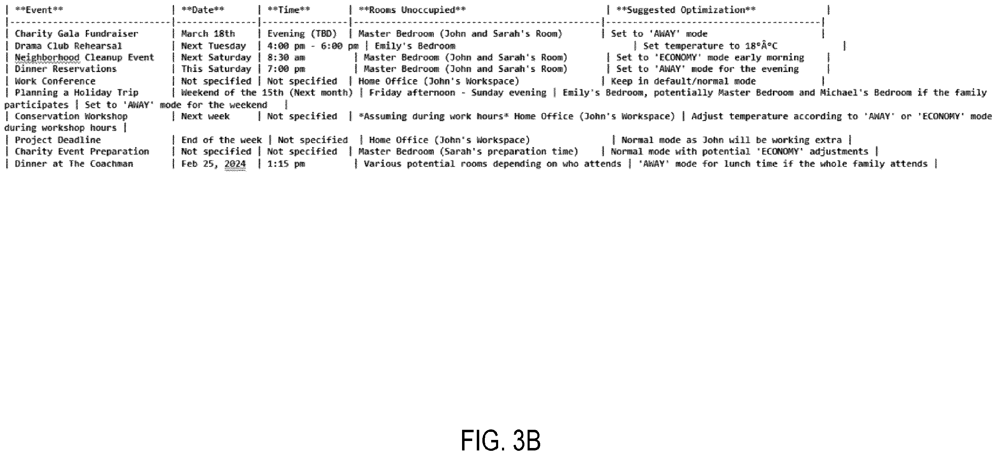

For example, engine 200 can execute a Bayesian determination for a predetermined time span, at preset and/or dynamically determined intervals (e.g., a 24 hour time span, every 8 hours, for example, as depicted in FIG. 3B), so as to segment the day according to applicable patterns, which can be leveraged to determine, derive, extract or otherwise activities/non-activities in/around a location.

In some embodiments and, optionally, in combination of any embodiment described above or below, a neural network technique may be one of, without limitation, feedforward neural network, radial basis function network, recurrent neural network, convolutional network (e.g., U-net) or other suitable network. In some embodiments and, optionally, in combination of any embodiment described above or below, an implementation of Neural Network may be executed as follows:
a. define Neural Network architecture/model,
b. transfer the input data to the neural network model,
c. train the model incrementally,
d. determine the accuracy for a specific number of timesteps,
e. apply the trained model to process the newly-received input data,
f. optionally and in parallel, continue to train the trained model with a predetermined periodicity.

In some embodiments and, optionally, in combination of any embodiment described above or below, the trained neural network model may specify a neural network by at least a neural network topology, a series of activation functions, and connection weights. For example, the topology of a neural network may include a configuration of nodes of the neural network and connections between such nodes. In some embodiments and, optionally, in combination of any embodiment described above or below, the trained neural network model may also be specified to include other parameters, including but not limited to, bias values/functions and/or aggregation functions. For example, an activation function of a node may be a step function, sine function, continuous or piecewise linear function, sigmoid function, hyperbolic tangent function, or other type of mathematical function that represents a threshold at which the node is activated. In some embodiments and, optionally, in combination of any embodiment described above or below, the aggregation function may be a mathematical function that combines (e.g., sum, product, and the like) input signals to the node. In some embodiments and, optionally, in combination of any embodiment described above or below, an output of the aggregation function may be used as input to the activation function. In some embodiments and, optionally, in combination of any embodiment described above or below, the bias may be a constant value or function that may be used by the aggregation function and/or the activation function to make the node more or less likely to be activated.

In Step 308, based on the analysis from Step 306, engine 200 can determine a set of patterns (or schedules, used interchangeably) for a user(s), a device(s) and/or the location. According to some embodiments, the determined patterns are based on the computational AI/ML and LLM analysis performed via engine 200, as discussed above.

In some embodiments, the set of patterns can correspond to, but are not limited to, types of events, types of detected activity, a time of day, a date, type of user, duration, amount of activity, quantity of activities, sublocations within the location (e.g., rooms in the house, for example), and the like, or some combination thereof. Accordingly, the patterns can be specific to a user, a device (e.g., a television in the living room, for example), a time, a date, and/or specific to the location (e.g., or room within a location - for example, the bedroom of the location).

According to some embodiments, the generated patterns can be compiled and stored as data structures (or files, items, or objects), which include data, metadata or other forms of information that can highlight and/or indicate the information depicted in the patterns, as discussed below respective to Step 310 in more detail. In some embodiments, such data/metadata can be provided within the data structure (and/or appended to the data structure) as a tag(s), which can be utilized for retrieval, execution and/or modification, as discussed in more detail below, at least respective to Process 400 of FIG. 4A.

According to some embodiments, tags can be in the form of, but not limited to, text, questions, phrases, images, character strings, and the like. For example, a tag for a pattern or activity within a pattern can state, "On day date time this event will occur / did occur leading to room/system adjustment, which is a one off/repeated event." Another example of a tag: "On Wednesday 5th Jan 2020 Emily will be away at an extra band practice until 9 pm - delay heating, one off." And, another example of a tag: "1/5/202; band practice; 9 pm". In some embodiments, tags can indicate a time, duration, place, event type, participants, user identifier (ID), room ID within a location, location type, and the like.

By way of a non-limiting example, according to some embodiments, FIG. 3B depicts a data structure that includes information related to a set of tagged patterns for certain events at a location. It should be understood that the form and/or format of the tag is non-limiting, and alternate forms/formats of tags, whether known or to be known, are considered as part of the scope of the instant application, as one of ordinary skill the art would readily understand.

Thus, according to some embodiments, Step 308 can involve engine 200 determining a set of data structures for a set of real-world and digital patterns (e.g., which devices in the location are used by which users, and which activities are performed on such devices at such times/locations), which can correspond to a user(s), a device(s), a time, a date and/or the location.

In Step 310, engine 200 can store the determined set of patterns in database 108, in a similar manner as discussed above. As above, in some embodiments, Step 310 can involve creating a data structure associated with each determined pattern, whereby each data structure can be stored in a proper storage location associated with an identifier of the user/device/location, as discussed above.

In some embodiments, a pattern can comprise a set of events, which can correspond to an activity and/or non-activity (e.g., sitting, sleeping, walking, talking, eating, watching, and the like, for example). In some embodiments, the pattern's data structure can be configured with header (or metadata) that identifies a user, device and/or the location, and/or a time period/interval of analysis (as discussed above); and the remaining portion of the structure providing the data of the activity/non-activity and status of entry-points during such sequence(s). In some embodiments, the data structure for a pattern can be relational, in that the events of a pattern can be sequentially ordered, and/or weighted so that the order corresponds to events with more or less activity.

In some embodiments, the structure of the data structure for a pattern can enable a more computationally efficient (e.g., faster) search of the pattern to determine if later detected events correspond to the events of the pattern, as discussed below in relation to at least Process 400 of FIG. 4A. In some embodiments, the data structures of patterns can be, but are not limited to, files, arrays, lists, binary, heaps, hashes, tables, trees, and the like, and/or any other type of known or to be known tangible, storable digital asset, item and/or object.

According to some embodiments, the sensor data can be identified and analyzed in a raw format, whereby upon a determination of the pattern, the data can be compiled into refined data (e.g., a format capable of being stored in and read from database 108). Thus, in some embodiments, Step 310 can involve the creation and/or modification (e.g., transformation) of the sensor data into a storable format.

In some embodiments, as discussed below, each pattern (and corresponding data structure) can be modified based on further detected behavior, as discussed below in relation to Process 400 of FIG. 4A.

Turning to FIG. 4A, Process 400 provides non-limiting example embodiments for the deployment and/or implementation of the disclosed location management framework.

According to some embodiments, Steps 402, 406 and 412 can be performed by identification module 202 of control engine 200; Steps 404 and 408 can be performed by analysis module 204; Step 410 and 414 can be performed by determination module 206; Steps 416 and 418 can be performed by output module 208.

According to some embodiments, Process 400 begins with Step 402 where engine 200 can monitor the location to detect, determine or otherwise identify activity related to a user and/or a device. In some embodiments, the monitoring can involve tracking users' movements, actions, presence, interactions (e.g., with other users, sensors, devices and/or items/equipment at the location, for example) and determining activity related to the users at the location.

According to some embodiments, for example, engine 200 can detect that a user has left his bedroom, walked down the stairs, disarmed the security system, adjusted the thermostat and opened the window in the kitchen.

In some embodiments, the monitoring and identification of events at the location can correspond to digital activities (e.g., streaming content, for example) and/or real-world activities (e.g., a user entering the location and/or specific room in the location, which can be effectuated via any of the sensors discussed above in relation to FIG. 1, discussed *supra).* In some embodiments, the monitoring and detection of an event in Step 402 can involve the generation of a tagged event data structure, in a similar manner as discussed above in Process 300 of FIG. 3.

In some embodiments, such monitoring and identification can occur continuously; according to a predetermined threshold, that can be tied to a time period (e.g., every n minutes, for example), based on an identity of a sensor, device and/or user; based on a type of movement in the location (e.g., sitting versus moving from room to room); and the like, or some combination thereof.

In Step 404, engine 200 can determine attributes of the activities of the event. Accordingly, in some embodiments, engine 200 can analyze the event and the real-world/digital data related thereto, and determine attributes, features and/or characteristics of the event. In some embodiments, such analysis can be performed via the AI/ML and/or LLM analysis discussed above.

In some embodiments, such attributes can correspond to, but not be limited to, ID of a user, ID of a device, type of device, position within the location, sensor triggered, type of control system (e.g., climate system versus security system), ID of an account, type of content, quantity and/or characteristics of content, network usage, time, time period (e.g., duration), date, frequency, and the like, or some combination thereof.

In some embodiments, the attributes can further include sensor data related to the environment for which the event occurred. For example, the sensor data can indicate attributes related to, but not limited to, weather forecast for the day, current temperature inside and outside of the house, current cloud coverage, precipitation, humidity, whether lights were turned on in the house, number of other users in the location, their activities, and the like.

Thus, as discussed above, the attributes can further be based on collected sensor data for the user that correlates to the event, such that calendar information for the user, as well as other contextual data (e.g., spatial, temporal, logical data, for example) related to the user's actions and/or their real-world/digital activities/profiles can be collected and identified.

In some embodiments, processing steps of Process 400 can proceed from Step 404 to Step 406 then to Step 408. Accordingly, in some embodiments, Step 406 can involve engine 200 performing a search of database 108, whereby the search can be based on a query compiled from data associated with the attributes of the event as compared to the tags of the patterns, as discussed *supra.* In some embodiments, such attributes can enable engine 200 to identify stored behavior patterns of users that correspond to known activities at the location, at certain times. For example, if the attributes indicate that the user is in the kitchen at 7 AM on a weekday, then stored behavior patterns related to the user and/or location related to activity at such time and date within the location's kitchen can be retrieved from database 108.

In Step 408, engine 200 can analyze the attributes of the event via an AI/ML and/or LLM model executing in association with a control panel for the location. As discussed above, the control panel can correspond to a climate control system, security system and/or a/some combination thereof.

According to some embodiments, the discussion herein will focus on utilizing an LLM; however, it should not be construed as limiting, as one of skill in the art would recognize that AI and/or ML models can be utilized for such analysis without departing from the scope of the instant discussion.

Accordingly, in some embodiments, as discussed above, the LLM analysis can involve input corresponding to the attributes of the event or the attributes of the event and the information related to the retrieved stored behavior patterns (as discussed above in relation to Step 406). In some embodiments, the analysis performed in Step 408 can further and/or additionally be performed via any of the AI/ML models discussed above.

Accordingly, in some embodiments, based on the analysis performed in Step 408, engine 20 can determine and output an LLM prompt, as in Step 410. According to some embodiments, the prompt can correspond to a context of the user, which can be in accordance with controls related to the control system.

For example, with respect to a climate system, continuing the above example - the user's actions indicate they have opened the window in the kitchen; however, their past behavior patterns indicate that prior to entering the kitchen, they adjust the thermostat a certain number of degrees to make it warmer. Their calendar data indicates a new event in 1 hour that is not normally part of their weekday schedule - a doctor's appointment, and their email/social activity indicates that the user has been communicating with the doctor about an appointment for a Flu shot. Therefore, engine 200 can compile this information, and via execution of the LLM model, can determine a prompt which can state: "Are you feeling well this morning? Would you like me to adjust the thermostat and/or turn on the ceiling fan to cool the room down?"

In some embodiments, such LLM prompt may also provide an indication as to why certain system controls were previously set - for example: "According to your previous patterns of activity and/or settings, the A/C was set to 72 degrees." This can be output as provided below. Accordingly, as provided herein (e.g., via Step 412 *infra*), a user can intake this and provide feedback to modify how the control system operates.

Such LLM prompt output can be generated in any type of format, which can include, but is not limited to, text, audio, video, image, electronic message, and the like, or some combination thereof.

Thus engine 200 can cause the output of the determined LLM prompt to be output based on the type of format. In some embodiments, for example, a sensor connected to the control system and/or a microphone on the control panel of the system can audibly output the determined prompt. In some embodiments, the sensor closest to the user (e.g., in the kitchen, for example), can be identified and caused to output the prompt.

In another non-limiting example, engine 200 can cause an SMS message to be sent to the user's device, which can cause a visible notification to appear on the device's display, and enable the user to enter a response. In some embodiments, the notification message can cause a webpage or network location page to open, which can enable the user to provide feedback.

Accordingly, as discussed above, the framework herein can enable the control system to proactively address discrepancies in the user's schedule and, in real-time, enable input of adjustments of how the location's environment can be modified to adjust to the outlier activity.

In Step 412, engine 200 can receive feedback response to the LLM prompt. For example, upon audibly outputting a voice request to the user (as per Step 410), engine 200 can turn on the microphones of the sensors (and/or UE of the user) to collect audio data related to the user's response. In some embodiments, engine 200 can cause the feedback (from Step 412) to be stored in association with the behaviors retrieved in Step 406, whereby such behaviors can be updated to reflect the most recent behaviors of the user.

In Step 414, engine 200 can perform a computational analysis of the feedback from Step 412 based on the event attributes (from Step 404) and/or stored behavior (from Step 406) and determine whether to modify the stored behavior. Such analysis can involve any of the AI/ML and/or LLM (e.g., NLP) analysis discussed above. For example, the mode or operations of the location (e.g., house) may be operating according to the protocols and/or procedures of the stored behavior, and in Step 414, based on the feedback from the user, engine 200 can determine whether to modify such protocols/procedures so as to reflect the current desire/intent of the user.

Thus, for example, a user can have a dialog with the control system (via the LLM, as per Steps 410 and 412) that enables dynamic, real-time alterations and/or confirmations of the control system's operation. For example, if/when a user clarifies specific events should not have action taken against them, the system can then disregard (whereas it would normally perform such actions as per system settings, user settings, and/or stored behavior, for example); for example: "don't push the thermostat past 26 degrees Celsius when only my children are in the house," "no need to sound the alarm, that is the housekeeper entering the house, I forgot to disarm the system."

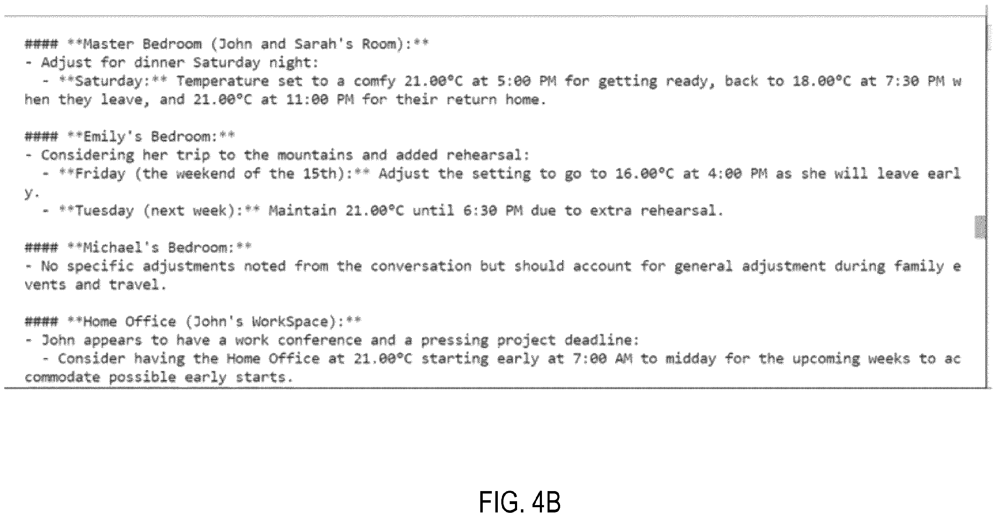

By way of a non-limiting example, FIG. 4B depicts an example for which a tagged pattern can be modified. Such modifications can correspond to, but not limited to, instructions in the behavior, events in the behavior, tags, users/participants involved, and the like.

Thus, in some embodiments, in Step 414 when engine 200 determines that the feedback indicates that the current operations of the control system are not to be changed, then engine 200 can proceed to Step 416 where the information related to the processing from Step 402-416 can be stored to further update the behavior, and monitoring in Step 402 can continue.

In some embodiments, when engine 200 determines that the feedback (from Step 412) indicates that the procedures and protocols are to be modified, then processing proceeds to Step 418, where engine 200 can modify such procedures/protocols based on the instructions provided in the feedback.

Accordingly, in some embodiments, Step 418 can involve engine 200 generating and executing newly defined and/or modified controls for the location based on the feedback. For example, if the user approves of turning on the fan's in the kitchen, then engine 200 can cause the control panel to trigger the kitchen ceiling fan to automatically turn on, which can be at a speed proportionate to the indoor and/or outdoor temperature differential and/or requested temperature reduction identified by the user (which can be derived from the user's audio input and/or the temperature they normally reduce/increase the thermostat on such days as per the stored behavior(s), and the like). Accordingly, Step 418 can involve engine 200 executing the AI/MI, and/or LLM models in a similar manner as discussed above to determine the controls from the feedback from the user (from Step 412), whereby the control panel can be caused to automatically execute real-world commands that modify the location's environment.

Accordingly, in some embodiments, engine 200 can cause an "announcement" or notification (similar to the LLM output from Step 410 discussed *supra),* in that the user can be alerted to the reasoning for and/or performance of the adjustment performed in Step 418.

In some embodiments, such generated controls and data related to the modified environment can further be stored and fed to the AI/ML models, as discussed above, which can enable updating of patterns and/or creation of new patterns for the user and/or location.

By way of another non-limiting example, respective to a security system, the disclosed framework can adapt and adjust its reasoning for triggering alarms, arming the system, disarming the system and the like. In a LLM-based security system, the control panel of the security system, which has integrated therein engine 200, for example, can understand the users and location, and track authorized users of the property. Upon an event corresponding to an unauthorized user being detected at the front door and/or in the house, for example (e.g., which is not ordinarily present from the stored behavior patterns for the home, discussed *supra),* such user can be channeled via a generated LLM prompt. For example, the LLM prompt can state "Please identify yourself and/or your purpose for being here."

In some embodiments, if the response is not satisfactory from its NLP analysis via the LLM model of engine 200 (e.g., the user either does not respond, runs away or gives a factually incorrect response), then an alarm can be triggered. For example, if the user states they are here to fix the plumbing, yet not plumbing appointment can be found in any resident user's calendar, emails and/or communications among themselves (e.g., Mom tells Dad that the plumber is coming today from a text, for example), the alarm can be triggered and/or the user can be warned prior to such alarm via another LLM prompt being output (e.g., "Exit the property at once or the authorities will be called", for example).

In some embodiments, if the response is approved - for example, the user identifies they are a Walmart delivery person that has access to the home to put the groceries in the refrigerator, and such event is identified in a resident user's calendar and/or email receipt message, then the alarm can be toggled to an "off' mode, for example, which can enable the user to enter. After a predetermined period of time, another LLM prompt can be generated if the user remains at the location more than expected (e.g., the motion in the kitchen near the refrigerator has halted, yet the front door which was unlocked has not been opened for a predetermined period of time after the motion was detected as stopping (e.g., 1 minute). If such case occurs, then another LLM prompt can be generated and/or security system controls can be generated and executed causing the alarm to trigger.

Thus, as seen from the above example, the disclosed framework can improve a security system to reason against current events at the location, whereby rules for inside, outside and/or certain areas in/around the location can be based on the requirements, context and/or current activity of a user(s) at the location. This, therefore, provides a more robust system that can account for real-world activities that may deviate from what is predicted. It should be understood that such adaptive controls can be performed for climate systems, as discussed above.

FIG. 7 is a schematic diagram illustrating a client device showing an example embodiment of a client device that may be used within the present disclosure. Client device 700 may include many more or less components than those shown in FIG. 7. However, the components shown are sufficient to disclose an illustrative embodiment for implementing the present disclosure. Client device 700 may represent, for example, UE 102 discussed above at least in relation to FIG. 1.

As shown in the figure, in some embodiments, Client device 700 includes a processing unit (CPU) 722 in communication with a mass memory 730 via a bus 724. Client device 700 also includes a power supply 726, one or more network interfaces 750, an audio interface 752, a display 754, a keypad 756, an illuminator 758, an input/output interface 760, a haptic interface 762, an optional global positioning systems (GPS) receiver 764 and a camera(s) or other optical, thermal or electromagnetic sensors 766. Device 700 can include one camera/sensor 766, or a plurality of cameras/sensors 766, as understood by those of skill in the art. Power supply 726 provides power to Client device 700.

Client device 700 may optionally communicate with a base station (not shown), or directly with another computing device. In some embodiments, network interface 750 is sometimes known as a transceiver, transceiving device, or network interface card (NIC).

Audio interface 752 is arranged to produce and receive audio signals such as the sound of a human voice in some embodiments. Display 754 may be a liquid crystal display (LCD), gas plasma, light emitting diode (LED), or any other type of display used with a computing device. Display 754 may also include a touch sensitive screen arranged to receive input from an object such as a stylus or a digit from a human hand.

Keypad 756 may include any input device arranged to receive input from a user. Illuminator 758 may provide a status indication and/or provide light.

Client device 700 also includes input/output interface 760 for communicating with external. Input/output interface 760 can utilize one or more communication technologies, such as USB, infrared, Bluetooth^{™}, or the like in some embodiments. Haptic interface 762 is arranged to provide tactile feedback to a user of the client device.

Optional GPS transceiver 764 can determine the physical coordinates of Client device 700 on the surface of the Earth, which typically outputs a location as latitude and longitude values. GPS transceiver 764 can also employ other geo-positioning mechanisms, including, but not limited to, triangulation, assisted GPS (AGPS), E-OTD, CI, SAI, ETA, BSS or the like, to further determine the physical location of client device 700 on the surface of the Earth. In one embodiment, however, Client device 700 may through other components, provide other information that may be employed to determine a physical location of the device, including for example, a MAC address, Internet Protocol (IP) address, or the like.

Mass memory 730 includes a RAM 732, a ROM 734, and other storage means. Mass memory 730 illustrates another example of computer storage media for storage of information such as computer readable instructions, data structures, program modules or other data. Mass memory 730 stores a basic input/output system ("BIOS") 740 for controlling low-level operation of Client device 700. The mass memory also stores an operating system 741 for controlling the operation of Client device 700.

Memory 730 further includes one or more data stores, which can be utilized by Client device 700 to store, among other things, applications 742 and/or other information or data. For example, data stores may be employed to store information that describes various capabilities of Client device 700. The information may then be provided to another device based on any of a variety of events, including being sent as part of a header (e.g., index file of the HLS stream) during a communication, sent upon request, or the like. At least a portion of the capability information may also be stored on a disk drive or other storage medium (not shown) within Client device 700.

Applications 742 may include computer executable instructions which, when executed by Client device 700, transmit, receive, and/or otherwise process audio, video, images, and enable telecommunication with a server and/or another user of another client device. Applications 742 may further include a client that is configured to send, to receive, and/or to otherwise process gaming, goods/services and/or other forms of data, messages and content hosted and provided by the platform associated with engine 200 and its affiliates.

As used herein, the terms "computer engine" and "engine" identify at least one software component and/or a combination of at least one software component and at least one hardware component which are designed/programmed/configured to manage/control other software and/or hardware components (such as the libraries, software development kits (SDKs), objects, and the like).

Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. In some embodiments, the one or more processors may be implemented as a Complex Instruction Set Computer (CISC) or Reduced Instruction Set Computer (RISC) processors; x86 instruction set compatible processors, multicore, or any other microprocessor or central processing unit (CPU). In various implementations, the one or more processors may be dual-core processor(s), dual-core mobile processor(s), and so forth.

Computer-related systems, computer systems, and systems, as used herein, include any combination of hardware and software. Examples of software may include software components, programs, applications, operating system software, middleware, firmware, software modules, routines, subroutines, functions, methods, procedures, software interfaces, application program interfaces (API), instruction sets, computer code, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

For the purposes of this disclosure a module is a software, hardware, or firmware (or combinations thereof) system, process or functionality, or component thereof, that performs or facilitates the processes, features, and/or functions described herein (with or without human interaction or augmentation). A module can include sub-modules. Software components of a module may be stored on a computer readable medium for execution by a processor. Modules may be integral to one or more servers, or be loaded and executed by one or more servers. One or more modules may be grouped into an engine or an application.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores," may be stored on a tangible, machine readable medium and supplied to various customers or manufacturing facilities to load into the fabrication machines that make the logic or processor. Of note, various embodiments described herein may, of course, be implemented using any appropriate hardware and/or computing software languages (e.g., C++, Objective-C, Swift, Java, JavaScript, Python, Perl, QT, and the like).

For example, exemplary software specifically programmed in accordance with one or more principles of the present disclosure may be downloadable from a network, for example, a website, as a stand-alone product or as an add-in package for installation in an existing software application. For example, exemplary software specifically programmed in accordance with one or more principles of the present disclosure may also be available as a client-server software application, or as a web-enabled software application. For example, exemplary software specifically programmed in accordance with one or more principles of the present disclosure may also be embodied as a software package installed on a hardware device.

For the purposes of this disclosure the term "user", "subscriber" "consumer" or "customer" should be understood to refer to a user of an application or applications as described herein and/or a consumer of data supplied by a data provider. By way of example, and not limitation, the term "user" or "subscriber" can refer to a person who receives data provided by the data or service provider over the Internet in a browser session, or can refer to an automated software application which receives the data and stores or processes the data. Those skilled in the art will recognize that the methods and systems of the present disclosure may be implemented in many manners and as such are not to be limited by the foregoing exemplary embodiments and examples. In other words, functional elements being performed by single or multiple components, in various combinations of hardware and software or firmware, and individual functions, may be distributed among software applications at either the client level or server level or both. In this regard, any number of the features of the different embodiments described herein may be combined into single or multiple embodiments, and alternate embodiments having fewer than, or more than, all of the features described herein are possible.

Functionality may also be, in whole or in part, distributed among multiple components, in manners now known or to become known. Thus, myriad software/hardware/firmware combinations are possible in achieving the functions, features, interfaces and preferences described herein. Moreover, the scope of the present disclosure covers conventionally known manners for carrying out the described features and functions and interfaces, as well as those variations and modifications that may be made to the hardware or software or firmware components described herein as would be understood by those skilled in the art now and hereafter.

Furthermore, the embodiments of methods presented and described as flowcharts in this disclosure are provided by way of example in order to provide a more complete understanding of the technology. The disclosed methods are not limited to the operations and logical flow presented herein. Alternative embodiments are contemplated in which the order of the various operations is altered and in which sub-operations described as being part of a larger operation are performed independently.

While various embodiments have been described for purposes of this disclosure, such embodiments should not be deemed to limit the teaching of this disclosure to those embodiments. Various changes and modifications may be made to the elements and operations described above to obtain a result that remains within the scope of the systems and processes described in this disclosure.

## Claims

1. A method comprising:
monitoring, over a network, via a set of devices associated with a control system, a location, the monitoring comprising collecting data via at least a portion of the set of devices;
detecting, based on the monitoring, an event at the location;
identifying a portion of a predicted pattern of activity for the location, the portion being at a time proximate to a time of the event, the predicted pattern of activity comprising at least one tag comprising descriptive information;
analyzing, via an artificial intelligence (AI) model, the portion of the predicated pattern of activity based on event;
determining, based on the analysis, whether to modify the portion of the predicted pattern of activity; and
controlling, based on the modification determination, operation of the set of devices associated with the control system.

2. The method of claim 1, further comprising:
outputting to a user associated with the location, a prompt related to approval of the event in view of the predicted pattern of activity;
receiving feedback; and
performing the determination of whether to modify the portion of the predicted pattern of activity based on analysis of the feedback.

3. The method of claim 1, further comprising the controlling of the operation of the set of devices being a modification to the portion of the predicted pattern of activity, the modification comprising a change to the at least one tag.

4. The method of claim 1, wherein the control of the operation of the set of devices is to accommodate the event without triggering the control system.

5. The method of claim 1, further comprising:
analyzing the collected data related to the event;
determining attributes of the event; and
identifying the predicted pattern of activity based on the attributes of the event.

6. The method of claim 1, further comprising:
storing the event with a tag, the tag comprising descriptive information related to the event that corresponds to a reasoning for the detection of the event.

7. The method of claim 1, wherein the detection of the event is based on at least one of an email, text message, voice call data, physical activity at the location, user movement at the location, digital activity associated with the activity, a time, date, climate, security alert, personal information related to a user of the location, social activity of the user, a user provided schedule, a predicted location-based schedule, and user identity.

8. The method of claim 1, further comprising:
collecting data from each of the set of devices;
analyzing the collected data;
determining a set of patterns of activity for the user; and
storing, in the database, the set of patterns of activity, wherein the identified pattern of activity is retrieved from the stored set of patterns of activity.

9. The method of claim 1, wherein the control system is a climate control system.

10. The method of claim 1, wherein the control system is a security system.

11. A system comprising:
a processor configured to:
monitor, over a network, via a set of devices associated with a control system, a location, the monitoring comprising collecting data via at least a portion of the set of devices;
detect, based on the monitoring, an event at the location;
identify a portion of a predicted pattern of activity for the location, the portion being at a time proximate to a time of the event, the predicted pattern of activity comprising at least one tag comprising descriptive information;
analyze, via an artificial intelligence (AI) model, the portion of the predicated pattern of activity based on event;
determine, based on the analysis, whether to modify the portion of the predicted pattern of activity; and
control, based on the modification determination, operation of the set of devices associated with the control system.

12. The system of claim 11, wherein the processor is further configured to:
output to a user associated with the location, a prompt related to approval of the event in view of the predicted pattern of activity;
receive feedback; and
perform the determination of whether to modify the portion of the predicted pattern of activity based on analysis of the feedback.

13. The system of claim 11, further comprising the controlling of the operation of the set of devices being a modification to the portion of the predicted pattern of activity, the modification comprising a change to the at least one tag.

14. The system of claim 11, wherein the control of the operation of the set of devices is to accommodate the event without triggering the control system.

15. The system of claim 11, wherein the processor is further configured to:
analyze the collected data related to the event;
determine attributes of the event; and
identify the predicted pattern of activity based on the attributes of the event.

16. A non-transitory computer-readable storage medium tangibly encoded with computer-executable instructions that when executed by a device, perform a method comprising:
monitoring, over a network, via a set of devices associated with a control system, a location, the monitoring comprising collecting data via at least a portion of the set of devices;
detecting, based on the monitoring, an event at the location;
identifying a portion of a predicted pattern of activity for the location, the portion being at a time proximate to a time of the event, the predicted pattern of activity comprising at least one tag comprising descriptive information;
analyzing, via an artificial intelligence (AI) model, the portion of the predicated pattern of activity based on event;
determining, based on the analysis, whether to modify the portion of the predicted pattern of activity; and
controlling, based on the modification determination, operation of the set of devices associated with the control system.

17. The non-transitory computer-readable storage medium of claim 16, further comprising:
outputting to a user associated with the location, a prompt related to approval of the event in view of the predicted pattern of activity;
receiving feedback; and
performing the determination of whether to modify the portion of the predicted pattern of activity based on analysis of the feedback.

18. The non-transitory computer-readable storage medium of claim 16, further comprising the controlling of the operation of the set of devices being a modification to the portion of the predicted pattern of activity, the modification comprising a change to the at least one tag.

19. The non-transitory computer-readable storage medium of claim 16, wherein the control of the operation of the set of devices is to accommodate the event without triggering the control system.

20. The non-transitory computer-readable storage medium of claim 16, further comprising:
analyzing the collected data related to the event;
determining attributes of the event; and
identifying the predicted pattern of activity based on the attributes of the event.
